# EUROPÄISCHE PATENTSCHRIFT

(11) **EP 1 719 657 B1**
(45) Veröffentlichungstag und Bekanntmachung des Hinweises auf die Patenterteilung: **30.01.2008**
(21) Anmeldenummer: 06113139.7
(22) Anmeldetag: 26.04.2006
(51) Int. Cl.: B60K 15/077, F02M 37/02, F02M 37/10

(54) **In einem Kraftstoffbehälter angeordnete Fördereinheit**
Supply unit arranged in a fuel tank
Unité d'alimentation arrangée dans un réservoir à carburant

(30) Priorität: 04.05.2005 DE 102005021322
(43) Veröffentlichungstag der Anmeldung: 08.11.2006
(73) Patentinhaber: Siemens VDO Automotive AG, 93055 Regensburg (DE)
(72) Erfinder: Markefka, Klaus, 61197, Florstadt (DE)

(56) Entgegenhaltungen:
- WO-A-20/05042292
- WO-A-20/05053987
- DE-A1- 19 518 755
- US-A1- 2004 161 342

## Beschreibung

Gegenstand der Erfindung ist eine in einem Kraftstoffbehälter eines Kraftfahrzeugs angeordnete Fördereinheit mit einem Schwalltopf, der in seinem Boden oder im unteren Bereich seiner Seitenwand zumindest eine Öffnung besitzt, einer in dem Schwalltopf angeordneten Kraftstoffpumpe zum Fördern von Kraftstoff aus dem Schwalltopf und einer mit der Kraftstoffpumpe mechanisch verbundenen Saugstrahlpumpe zum Fördern von Kraftstoff aus dem Kraftstoffbehälter in den Schwalltopf, wobei die Saugstrahlpumpe einen Ansaugbereich aufweist, der mit der Öffnung im Schwalltopf verbunden ist. Solche Fördereinheiten werden verwendet, um Kraftstoff aus dem Kraftstoffbehälter zu einer Brennkraftmaschine des Kraftfahrzeugs zu fördern.

Derartige Fördereinheiten sind seit langem Stand der Technik und somit bekannt. Die Kraftstoffpumpe ist dabei oftmals in einem Pumpenhalter gelagert. Der Pumpenhalter dient einerseits zur Halterung der Kraftstoffpumpe in der Fördereinheit und andererseits zur Dämpfung von Geräuschen und Vibrationen, die im Betrieb der Kraftstoffpumpe von dieser erzeugt werden. Die Saugstrahlpumpe dient der Befüllung des Schwalltopfes, so dass die Kraftstoffpumpe permanent Kraftstoff ansaugen und über die Vorlaufleitung zur Brennkraftmaschine fördert. Insbesondere bei einem niedrigen Kraftstoffpegel im Kraftstoffbehälter wird auf diese Weise auch bei Kurvenfahrten oder dem Fahren bergan oder bergab gewährleistet, dass ausreichend Kraftstoff an der Ansaugöffnung der Kraftstoffpumpe zur Verfügung steht. Die Saugstrahlpumpe ist dazu oberhalb einer im Boden des Schwalltopfes befindlichen Öffnung angeordnet und deckt diese gegenüber dem Inneren des Schwalltopfes ab. Der Bereich der Öffnung ist dem Ansaugbereich der Saugstrahlpumpe zugeordnet, über den der Kraftstoff aus dem Kraftstoffbehälter angesaugt wird. Aufgrund der Fahrdynamik ist die Fördereinheit wechselnden Belastungen ausgesetzt. Neben kurzeitigen Belastungen, wie Stöße und Vibrationen, wirken auf die Kraftstoffpumpe aber auch Beschleunigungen, die eine Auslenkung der Kraftstoffpumpe im Bereich ihres Masseschwerpunktes oder des Pumpenhalters erzeugen. Durch diese Auslenkungen wird auch die mit der Kraftstoffpumpe verbundene Saugstrahlpumpe verschwenkt, so dass es zu einem seitlichen Anheben der Saugstrahlpumpe kommt, wodurch die Öffnung im Schwalltopfboden nicht mehr vollständig abgedeckt ist. Der somit erzwungene Druckausgleich zwischen dem Ansaugbereich und der Umgebung bewirkt, dass die Förderleistung der Saugstrahlpumpe zusammenbricht.

Das Dokument US 2004/161342 A1 offenbart eine Fördereinheit mit einem Schwalltopf , der in seinem Boden oder im unteren Bereich seiner Seitenwand zumindest eine Öffnung besitzt, einer in dem Schwalltopf angeordneten Kraftstoffpumpe zum Fördern von Kraftstoff aus dem Schwalltopf und einer mit der Kraftstoffpumpe mechanisch verbundenen Saugstrahlpumpe zum Fördern von Kraftstoff aus dem Kraftstoffbehälter in den Schwalltopf, wobei die Saugstrahlpumpe einen Ansaugbereich aufweist, der mit der Öffnung im Schwalltopf verbunden ist, wobei an dem Ansaugbereich eine die Öffnung umgebende Dichtung angeordnet ist, welche die Öffnung in einem solchen Abstand umgibt, wobei auch bei einer Verschiebung oder Verschwenkung des Ansaugbereichs der Saugstrahlpumpe die Öffnung von der Dichtung umgeben ist.

Die Aufgabe der Erfindung besteht darin, eine Fördereinheit zu schaffen, die unter allen Umständen einen zuverlässigen Betrieb der Saugstrahlpumpe gewährleistet.

Diese Aufgabe wird durch eine Fördereinheit gemäß Anspruch 1 oder Anspruch 3 gelöst.

Mit der Anordnung einer Dichtung wird erreicht, dass der Ansaugbereich der Saugstrahlpumpe auch unter rauen Betriebsbedingungen immer zuverlässig gegen die umgebenden Bereiche abgedichtet ist, so dass der für die Förderung von Kraftstoff notwendige Unterdruck im Ansaugbereich aufrechterhalten wird. Die Anordnung einer Dichtung im Bereich der Öffnung im Boden des Schwalltopfes erfordert dabei einen relativ geringen Aufwand, wodurch aufwändige Maßnahmen im Bereich der Aufhängung der Kraftstoffpumpe vermieden werden.

Starke von außen einwirkende Belastungen können dazu führen, dass die Auslenkung der Kraftstoffpumpe so stark ist, dass der Ansaugbereich der Saugstrahlpumpe erheblich vom Boden des Schwalltopfes abhebt. Um auch bei derartig großen Auslenkungen eine zuverlässigen Abdichtung des Ansaugbereichs zu erhalten, ist die Dichtlippe erfindungsgemäss so ausgebildet, dass zumindest eine Teil der Dichtlippe im Ruhezustand plan auf dem Boden des Schwalltopfes aufliegt. Dieser plan aufliegende Teil der Dichtlippe bildet eine Art Reserve, der in Abhängigkeit des Grads der Auslenkung und damit des Abhebens des Ansaugbereichs nach und nach mit angehoben wird. Dieser plan aufliegende Teil der Dichtlippe ist dabei so groß gewählt, dass beim maximal möglichen Abheben des Ansaugbereiches das radial äußere Ende der Dichtlippe in Kontakt mit dem Schwalltopfboden steht und somit die Abdichtung gewährleistet.

In einer vorteilhaften Ausgestaltung besitzt die Dichtung eine nach radial außen gerichtete Dichtlippe. Eine derart gestaltete Dichtlippe hat den Vorteil, dass sie aufgrund ihrer Flexibilität Bewegungen der Kraftstoffpumpe und somit der Saugstrahlpumpe ausgleichen kann.

Eine gute Dichtwirkung mit gemäß einer vorteilhaften Ausgestaltung mit einer Gummidichtung erreicht, da eine derartige Dichtung flexibel genug ist, die erforderlichen Bewegungen, infolge des Abhebens des Ansaugbereichs, auszuführen.

Ein Abheben der Dichtung vom Boden des Schwalltopfes wird gemäß einer alternativen erfindungsgemässen Ausgestaltung vermieden, wenn die Dichtung an ihrem dem Boden des Schwalltopfes zugewandten Ende mit dem Boden lösbar verbunden ist, insbesondere mittels Verklipsen. Die lösbare Verbindung erlaubt eine Fixierung des radial äußeren Randes der Dichtung, wodurch eine größere Sicherheit gegen ein Abheben der Dichtung vom Schwalltopfboden mit dem damit verbundenen Druckausgleich zwischen Ansaugbereich und Umgebung erreicht wird. Gleichzeitig wirken die an der Dichtung angreifenden Haltekräfte infolge der Fixierung der Auslenkung der Kraftstoffpumpe und damit der Saugstrahlpumpe entgegen. Zudem ermöglicht das Verklipsen der Dichtung mit am Boden des Schwalltopfes angeordneten Rastelementen eine einfache Montage. Der radial äußere Rand ist hierzu vorteilhafterweise als radial umlaufender Wulst ausgebildet.

In einer anderen Ausgestaltung besitzt der sind an den radial äußeren Rand anschließende Bereich der Dichtung eine gegenüber dem Rand derart verringerte Wandstärke, dass eine relative Bewegung der Dichtung gegenüber dem Rand möglich ist. Der sich an den radial äußeren Rand anschließende Bereich erlaubt ein Nachgehen der Bewegung des Ansaugbereichs, wobei der radial äußere Rand der Dichtung in seiner Position verbleibt. Eine Übertragung von aus der Bewegung des Ansaugbereichs hervorgerufenen Kräften auf den die Dichtwirkung bewirkenden radial äußeren Rand wird somit vermieden.

In drei Ausführungsbeispielen wird die Erfindung näher erläutert. Es zeigen:
- Figur 1:: einen Schnitt durch eine Fördereinheit nach dem Stand der Technik,
- Figur 2:: einen Schnitt durch eine erfindungsgemäße Fördereinheit,
- Figur 3:: eine vergrößerte Darstellung der Dichtung nach Figur 2 in einer zweiten Ausführungsform und
- Figur 4:: eine dritte Ausführungsform der Dichtung nach Figur 3.

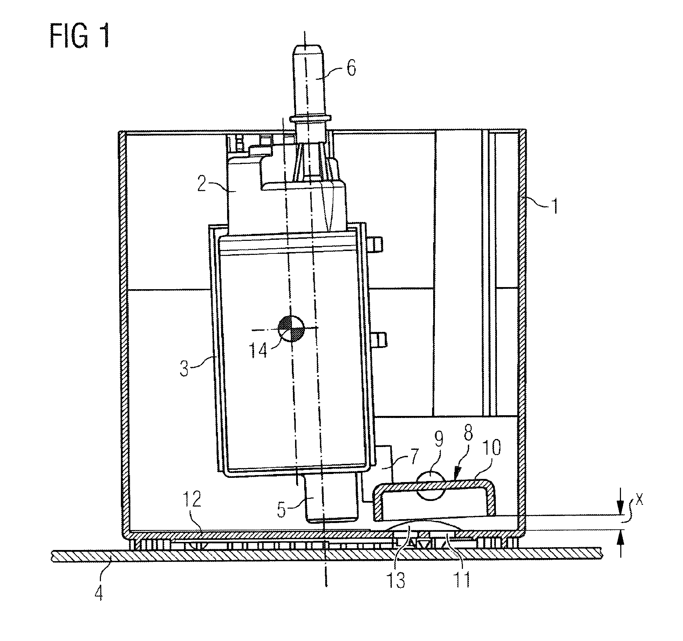

Die in Figur 1 gezeigte Fördereinheit nach dem Stand der Technik besteht aus einem Schwalltopf 1 mit einer darin angeordneten Kraftstoffpumpe 2, die in einem Pumpenhalter 3 gelagert ist. Der Schwalltopf 1 ist gegen den Boden eines Kraftstoffbehälters 4 vorgespannt. Die Kraftstoffpumpe 2 besitzt einen Einlassstutzen 5, über den sie Kraftstoff aus dem Schwalltopf 1 ansaugt und über den Auslass 6 zu einer nicht dargestellten Brennkraftmaschine des Kraftfahrzeugs fördert. Die Kraftstoffpumpe 2 ist über eine Verbindung 7 mit einer Saugstrahlpumpe 8 verbunden. Die Saugstrahlpumpe 8 wird mittels eines nicht dargestellten Treibstrahls angetrieben, der von der Kraftstoffpumpe 2 oder einer ebenfalls nicht dargestellten Rücklaufleitung von der Brennkraftmaschine entnommen wird. Der Treibstrahl tritt in das angedeutete, in die Zeichenebene hinein ausgerichtete Mischrohr 9 ein. Der in das Mischrohr eintretende Treibstrahl erzeugt in einem Ansaugbereich 10 einen Unterdruck, wodurch Kraftstoff aus dem Tank 4 über eine Öffnung 11 im Boden 12 des Schwalltopfes 1 angesaugt und über das Mischrohr 9 in den Schwalltopf 1 gefördert wird. Der Ansaugbereich 10 ist so gestaltet, dass er die Öffnung 11 im Boden 12 des Schwalltopfes 1 überdeckt. Ein in der Öffnung 11 angeordnetes Ventil 13 verhindert ein Leerlaufen des Schwalltopfes, wenn die Saugstrahlpumpe 8 nicht in Betrieb ist. In der gezeigten Darstellung ist die Kraftstoffpumpe 2 aufgrund von während des Fahrens auftretenden Kräften um einen Drehpunkt 14 verschwenkt. Der Drehpunkt 14 kann der Masseschwerpunkt der Kraftstoffpumpe 2 oder die Aufhängung der Kraftstoffpumpe 2 im Pumpenhalter 3 sein. Infolge des Verschwenkens der Kraftstoffpumpe 2 wird die Saugstrahlpumpe 8 über die beliebig gestaltbare Verbindung 7 mitverschwenkt. Das hat zur Folge, dass sich der untere Rand des Ansaugbereichs 10, mit dem die Saugstrahlpumpe 8 normalerweise auf dem Boden 12 aufliegt, in einem Abstand x oberhalb des Bodens 12 befindet. Mit dem Abheben des Ansaugbereichs 10 kommt es zu einem Druckausgleich mit der Umgebung, wodurch der Unterdruck im Ansaugbereich 10 nicht mehr aufrechterhalten werden kann, so dass die Kraftstoffförderung der Saugstrahlpumpe 8 zusammenbricht.

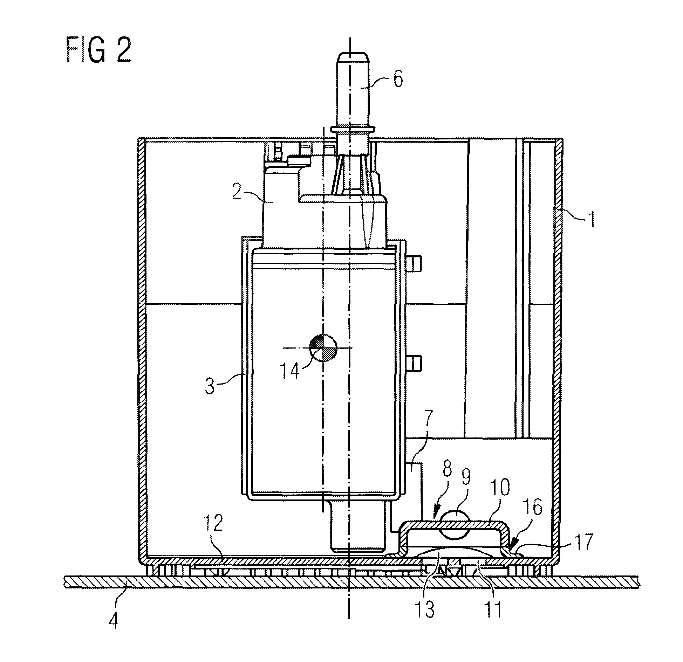

Die in Figur 2 gezeigte Fördereinheit unterscheidet sich zu der Fördereinheit nach Figur 1 darin, dass am unteren Rand des 15 des Ansaugbereichs 10 eine Dichtung 16 mit radial nach außen gerichteter Dichtlippe 17 angeordnet ist. Aufgrund ihrer Flexibilität dichtet die Dichtung 16 auch bei einem Verschwenken der Kraftstoffpumpe 2 und damit der Saugstrahlpumpe 8 den Ansaugbereich 10 gegenüber dem Boden 12 des Schwalltopfes 1 ab, so dass der für die Förderung von Kraftstoff aus dem Tank 4 in den Schwalltopf 1 notwendige Unterdruck zuverlässig aufrechterhalten wird.

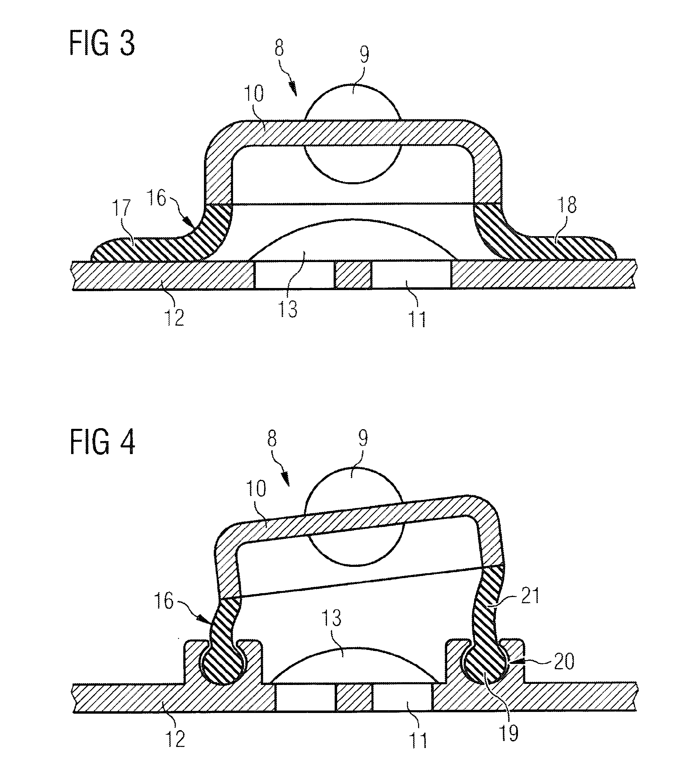

Figur 3 zeigt eine vergrößerte Darstellung einer ersten Ausführungsform der Dichtung 16. Die aus Gummi bestehende Dichtung 16 ist derart gestaltet, dass ein Teil 18 der Dichtung 16 auf dem Boden 12 des Schwalltopfes 1 plan aufliegt. Bei einer Auslenkung der Kraftstoffpumpe 2 wird die Saugstrahlpumpe 8 und mit ihr der Ansaugbereich 10 verschwenkt. Dabei hebt der plan aufliegende Teil 18 der Dichtung 16 nach und nach vom Boden 12 ab, wobei die Dichtlippe 17 mit dem Boden12 ständig in Kontakt bleibt, so dass der Unterdruck im Ansaugbereich 10 trotz der Auslenkung der Saugstrahlpumpe 8 aufrechterhalten bleibt.

Die in Figur 4 dargestellte weitere Ausführungsform der Dichtung 16 weist an ihrem dem Boden 12 zugewandten Ende einen umlaufenden Wulst 19 auf, der in eine am Boden 12 angeordnete Nut 20 eingeklipst ist, so dass die Dichtung 16 lösbar mit dem Boden 12 verbunden ist. Der sich an den als Wulst 19 ausgebildeten radial äußeren Rand anschließenden Bereich 21 besitzt eine geringere Wandstärke als der Wulst 19, infolge dessen der Bereich 21 eine ausreichende Flexibilität aufweist, um Bewegungen des Ansaugbereichs 10 relativ zum Boden 12 des Schwalltopfes 1 auszugleichen.

## Patentansprüche

1. Fördereinheit mit einem Schwalltopf (1), der in seinem Boden oder im unteren Bereich seiner Seitenwand zumindest eine Öffnung (11) besitzt, einer in dem Schwalltopf angeordneten Kraftstoffpumpe (2) zum Fördern von Kraftstoff aus dem Schwalltopf (1) und einer mit der Kraftstoffpumpe (2) mechanisch verbundenen Saugstrahlpumpe (8) zum Fördern von Kraftstoff aus dem Kraftstoffbehälter in den Schwalltopf, wobei die Saugstrahlpumpe (8) einen Ansaugbereich (10) aufweist, der mit der Öffnung im Schwalltopf verbunden ist, wobei an dem Ansaugbereich (10) eine die Öffnung (11) umgebende Dichtung (16) angeordnet ist, welche die Öffnung (11) in einem solchen Abstand umgibt, dass auch bei einer Verschiebung oder Verschwenkung des Ansaugbereichs (10) der Saugstrahlpumpe (8) die Öffnung (11) von der Dichtung (16) umgeben ist, indem zumindest ein Teil (18) der Dichtung (16) im Ruhezustand plan auf dem Boden (12) des Schwalltopfes (1) aufliegt.

2. Fördereinheit nach Anspruch 1, **dadurch gekennzeichnet , dass** die Dichtung (16) eine nach radial außen gerichtete Dichtlippe (17) besitzt.

3. Fördereinheit mit einem Schwalltopf (1), der in seinem Boden oder im unteren Bereich seiner Seitenwand zumindest eine Öffnung (11) besitzt, einer in dem Schwalltopf angeordneten Kraftstoffpumpe (2) zum Fördern von Kraftstoff aus dem Schwalltopf (1) und einer mit der Kraftstoffpumpe (2) mechanisch verbundenen Saugstrahlpumpe (8) zum Fördern von Kraftstoff aus dem Kraftstoffbehälter in den Schwalltopf, wobei die Saugstrahlpumpe (8) einen Ansaugbereich (10) aufweist, der mit der Öffnung im Schwalltopf verbunden ist, wobei an dem Ansaugbereich (10) eine die Öffnung (11) umgebende Dichtung (16) angeordnet ist, welche die Öffnung (11) in einem solchen Abstand umgibt, dass auch bei einer Verschiebung oder Verschwenkung des Ansaugbereichs (10) der Saugstrahlpumpe (8) die Öffnung (11) von der Dichtung (16) umgeben ist, indem die Dichtung (16) an ihrem dem Boden (12) des Schwalltopfes (1) zugewandten Ende (19) mit dem Boden (12, 20) lösbar, insbesondere mittels Verklipsen, verbunden ist.

4. Fördereinheit nach einem der Ansprüche 1 bis 3, **dadurch gekennzeichnet, dass** die Dichtung (16) eine Gummidichtung ist.

5. Fördereinheit nach Anspruch 3, **dadurch gekennzeichnet, dass** sich der an den radial äußeren Rand (19) anschließende Bereich (21) der Dichtung (16) eine gegenüber dem Rand (19) derart verringerte Wandstärke besitzt, dass eine relative Bewegung der Dichtung (16) gegenüber dem radial äußeren Rand (19) möglich ist.

## Claims

1. Fuel delivery unit, comprising a baffle pot (1), which in its base or in the lower region of its side wall possesses at least one opening (11), a fuel pump (2), disposed in the baffle pot, for delivering fuel out of the baffle pot (1), and a suction jet pump (8), mechanically connected to the fuel pump (2), for delivering fuel out of the fuel tank into the baffle pot, the suction jet pump (8) having an intake region (10) which is connected to the opening in the baffle pot, wherein a seal (16) surrounding the opening (11) is provided at the intake region, which seal surrounds the opening (11) at such a distance that the opening (11) is surrounded by the seal (16) even if the intake region (10) of the suction jet pump (8) is displaced or pivoted, since at least a part (18) of the seal (16) in the rest state rests flat upon the base (12) of the baffle pot (1).

2. Fuel delivery unit according to Claim 1, **characterized in that** the seal (16) possesses a radially outwardly directed sealing lip (17).

3. Fuel delivery unit, comprising a baffle pot (1), which in its base or in the lower region of its side wall possesses at least one opening (11), a fuel pump (2), disposed in the baffle pot, for delivering fuel out of the baffle pot (1), and a suction jet pump (8), mechanically connected to the fuel pump (2), for delivering fuel out of the fuel tank into the baffle pot, the suction jet pump (8) having an intake region (10) which is connected to the opening in the baffle pot, wherein a seal (16) surrounding the opening (11) is provided at the intake region, which seal surrounds the opening (11) at such a distance that the opening (11) is surrounded by the seal (16) even if the intake region (10) of the suction jet pump (8) is displaced or pivoted, since the seal (16), at its end (19) facing the base (12) of the baffle pot (1), is detachably connected to the base (12, 20), in particular by means of clip connection.

4. Fuel delivery unit according to one of Claims 1 to 3, **characterized in that** the seal (16) is a rubber seal.

5. Fuel delivery unit according to Claim 3, **characterized in that that** region (21) of the seal (16) which adjoins the radially outer edge (19) possesses a wall thickness which is reduced in such a way in relation to the edge (19) that a relative movement of the seal (16) in relation to the radially outer edge (19) is possible.

## Revendications

1. Unité d'alimentation comportant un pot d'accumulation (1) ayant dans son fond ou dans la partie inférieure de sa paroi latérale au moins une ouverture (11), une pompe à carburant (2) placée dans le pot d'accumulation et destinée à transférer du carburant hors du pot d'accumulation (1) et une pompe à jet aspirant (8) liée mécaniquement à la pompe à carburant (2) et destinée à transférer, à partir du réservoir à carburant, du carburant dans le pot d'accumulation, la pompe à jet aspirant (8) ayant une partie aspiration (10) liée à l'ouverture dans le pot d'accumulation, où un joint (16) entourant l'ouverture (11) est placé sur la partie aspiration (10) et entoure l'ouverture (11) à une distance telle que, même lors d'un glissement ou d'un pivotement de la partie aspiration (10) de la pompe à jet aspirant (8), l'ouverture (11) est entourée par le joint (16) en raison du fait qu'une partie (18) du joint (16) est, dans son état de repos, appliquée d'une façon plane sur le fond (12) du pot d'accumulation (1).

2. Unité d'alimentation selon la revendication 1, **caractérisée par le fait que** le joint (16) a une lèvre d'étanchéité (17) dirigée radialement vers l'extérieur.

3. Unité d'alimentation comportant un pot d'accumulation (1) ayant dans son fond ou dans la partie inférieure de sa paroi latérale au moins une ouverture (11), une pompe à carburant (2) placée dans le pot d'accumulation et destinée à transférer du carburant hors du pot d'accumulation (1) et une pompe à jet aspirant (8) liée mécaniquement à la pompe à carburant (2) et destinée à transférer, à partir du réservoir à carburant, du carburant dans le pot d'accumulation, la pompe à jet aspirant (8) comportant une partie aspiration (10) liée à l'ouverture dans le pot d'accumulation, où un joint (16) entourant l'ouverture (11) est placé sur la partie aspiration (10) et entoure l'ouverture (11) à une distance telle que, même lors d'un glissement ou d'un pivotement de la partie aspiration (10) de la pompe à jet aspirant (8), l'ouverture (11) est entourée par le joint (16) en raison du fait que le joint (16) est, à son extrémité (19) tournée vers le fond (12) du pot d'accumulation (1), lié au fond (12, 20) d'une façon démontable, notamment par encliquetage.

4. Unité d'alimentation selon l'une des revendications 1 à 3, **caractérisée par le fait que** le joint (16) est un joint en caoutchouc.

5. Unité d'alimentation selon la revendication 3, **caractérisée par le fait que** la partie (21) du joint (16) voisine du bord (19) radialement extérieur a une paroi d'une épaisseur plus faible que le bord (19) si bien qu'un mouvement relatif du joint (16) par rapport au bord (19) radialement extérieur est possible.
